# EUROPEAN PATENT SPECIFICATION

(11) **EP 1 978 766 B1**
(45) Date of publication and mention of the grant of the patent: **15.03.2017**
(21) Application number: 08100005.1
(22) Date of filing: 02.01.2008
(51) Int. Cl.: H04N 21/414, H04N 5/44, H04W 52/02, H04N 21/443, H04N 21/61, H04N 5/63

(54) **Method and apparatus for receiving and reproducing broadcast data by means of wireless communication**
Verfahren und Vorrichtung zum Empfangen und Wiedergeben von Rundfunkdaten mittels drahtloser Kommunikation
Procédé et appareil pour recevoir et reproduire des données de diffusion au moyen de communication sans fil

(30) Priority: 04.04.2007 KR 20070033375
(43) Date of publication of application: 08.10.2008
(73) Proprietor: Samsung Electronics Co., Ltd., Suwon-si, Gyeonggi-do, 443-742 (KR)
(72) Inventor: Oh, Jae-seuk, Seoul (KR); Choi, Hyun-seok, Seoul (KR)
(74) Representative: Appleyard Lees IP LLP

(56) References cited:
- EP-A1- 1 387 561
- EP-A1- 1 569 384
- EP-A1- 1 758 361
- EP-A2- 1 292 040
- US-A1- 2003 135 858
- US-A1- 2003 142 213
- US-A1- 2003 236 905

## Description

Aspects of the present invention relate to a method and apparatus for receiving and reproducing broadcast data and, more particularly, to a method and apparatus for receiving and reproducing broadcast data by means of wireless communication, which reduces power consumption and continuously provides a sound source or an image to a user even when the broadcast data is not being received smoothly in a shadow area.

Conventionally, wireless devices are able to receive audio or video broadcast, such as radio, Digital Multimedia Broadcasting (DMB), or streaming audio and/or video, and reproduce the received broadcast in real-time. Such a wireless device is disclosed in US 2003/135858 A1. If the wireless device is operating in a moving vehicle, and the vehicle goes into a shadow area, the connection with a wireless network (wireless Internet, portable Internet, radio, or DMB) may be disconnected, or a reception ratio may drop, making it difficult to view the broadcast program smoothly. A shadow area is an area where wireless communication is unavailable, such as under a bridge, within a building, a forest or a valley, or areas with no wireless access points. In addition, when the connection is disconnected or the reception ratio drops, conventional wireless devices may continue to attempt to communicate with the broadcast station, even though such communication is unnecessary and wastes power.

Embodiments of the present invention aim to provide a method and apparatus for receiving and reproducing broadcast data by means of wireless communication, by which a sound source or image is continuously provided to a user and power is saved by decreasing power provided to the apparatus for reproducing the broadcast data and reproducing a predetermined sound source or image until the wireless network is reconnected, if it is difficult to receive the broadcast data while the apparatus is operating in a shadow area when the broadcast data is received and reproduced.

Additional aspects and/or advantages of the invention will be set forth in part in the description which follows and, in part, will be obvious from the description, or may be learned by practice of the invention.

According to an aspect of the present invention, a method of receiving and reproducing broadcast data by wireless communication is provided. The method comprises: switching to a power saving mode which uses less electrical power than a mode employed while performing wireless communication, if the wireless communication is disconnected; and reproducing a predetermined sound source or image to a user in the power saving mode.

According to another aspect of the present invention, a computer readable recording medium storing a computer readable program to execute the method of receiving and reproducing broadcast data by wireless communication.

According to another aspect of the present invention, an apparatus to receive and reproduce broadcast data by wireless communication is provided. The apparatus comprises a controller to switch to a power saving mode that uses less electrical power than a mode employed while performing wireless communication, when a wireless network providing the wireless communication is disconnected; and a reproduction unit to reproduce a predetermined sound source or image to a user while the apparatus is operating in the power saving mode.

In addition to the example embodiments and aspects as described above, further aspects and embodiments will be apparent by reference to the drawings and by study of the following descriptions.

For a better understanding of the invention, and to show how embodiments of the same may be carried into effect, reference will now be made, by way of example, to the accompanying diagrammatic drawings in which::
FIG. 1 is a block diagram of an apparatus for receiving and reproducing broadcast data by wireless communication according to an example embodiment of the present invention;
FIG. 2 is a flowchart of a process of receiving and reproducing broadcast data by wireless communication according to an example embodiment of the present invention;
FIG. 3 is a flowchart of a process of receiving and reproducing broadcast data by wireless communication according to an example embodiment of the present invention; and
FIG. 4 is a flowchart of a process of receiving and reproducing broadcast data by wireless communication according to an example embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

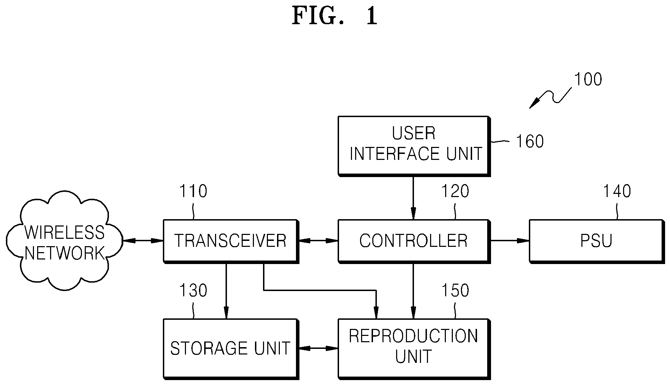

FIG. 1 is a block diagram of a broadcast data reproduction apparatus 100 for receiving and reproducing broadcast data by wireless communication according to an example embodiment of the present invention. The broadcast data reproduction apparatus 100 includes a transceiver 110, a controller 120, a storage unit 130, a power supply unit (PSU) 140, a reproduction unit 150, and a user interface unit 160. According to other aspects of the present invention, the broadcast data reproduction apparatus may include additional and/or different units. Similarly, the functionality of one or more of the above units may be combined into a single component. The broadcast data reproduction apparatus may be a laptop computer, mobile phone, personal digital assistant, personal entertainment device, or other device capable of performing wireless communication.

The transceiver 110 receives broadcast data from a wireless network or attempts to access the wireless network. The wireless network includes wireless Internet, portable Internet, radio, Digital Multimedia Broadcasting (DMB), and/or a cellular network. The broadcast data includes audio and/or video streaming data.

If the connection state of the wireless network is bad or disconnected, the controller 120 outputs a control signal to the PSU 140 for switching to a power saving mode. The controller 120 determines whether a wireless communication reconnection time has elapsed; if the wireless communication reconnection time has elapsed, the controller 120 controls the transceiver 110 to attempt to connect to the wireless network. The power saving mode is a mode in which the amount of electrical power used for wireless communication is reduced to an amount of electrical power enough for the transceiver 110 to perform an operation in response to a control signal for exiting the power saving mode received from the controller 120. The power saving mode uses less electrical power than a mode employed while performing wireless communication.

The storage unit 130 stores connection information (frequency, channel, Uniform Resource Locator (URL), playlist, etc.) of broadcast data being received, if the connection state of the wireless network is bad or disconnected. In addition, when reconnection to the wireless network is achieved, the storage unit 130 stores reproduction information (medium type, file name, reproduced time, etc.) of a sound source or image to be reproduced while the connection state of the wireless network is bad or disconnected.

The PSU 140 may switch power supplied to the transceiver 110 to the power saving mode according to a control signal received from the controller 120. The reproduction unit 150 receives a control signal from the controller 120 and reproduces the broadcast data received by the transceiver 110 or the sound source or image stored in the storage unit 130. The user interface unit 160 may receive a control signal to reproduce the broadcast data or the sound source or image stored in the storage unit 130. If a request is input from the user via of the user interface unit 160, the controller 120 may process the input request first.

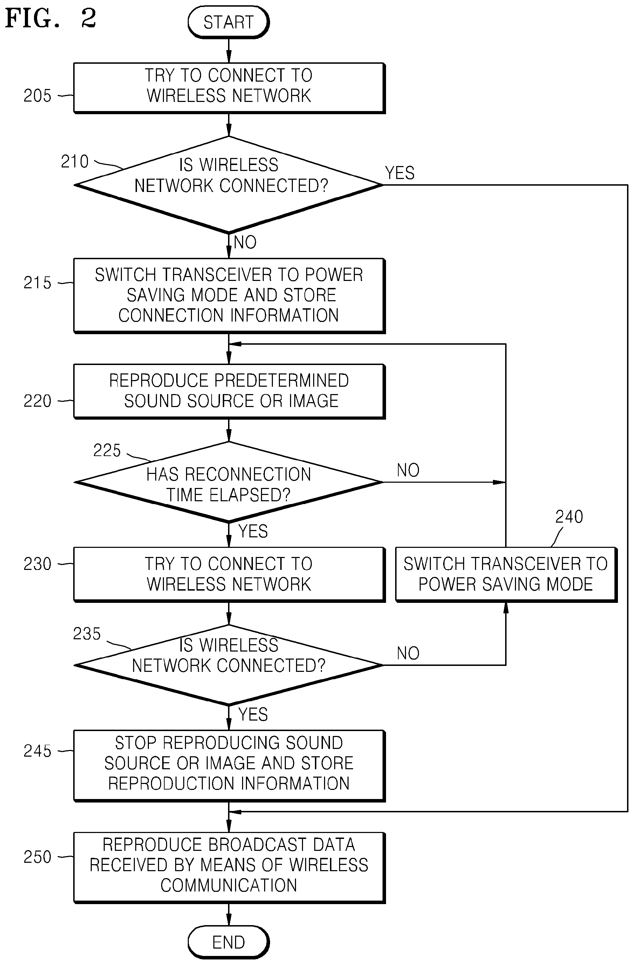

FIG. 2 is a flowchart of a process of receiving and reproducing broadcast data by wireless communication according to an example embodiment of the present invention. The process may be sequentially performed by the broadcast data reproduction apparatus 100 illustrated in FIG. 1. Thus, although not fully described, the contents relating to the broadcast data reproduction apparatus 100 also apply to the processes described below with respect to FIGS. 2-4.

The broadcast data reproduction apparatus 100 connects to a wireless network through the transceiver 110 and outputs audio or video in real-time using the reproduction unit 150. If the connection state of the wireless network is bad or disconnected when the broadcast data reproduction apparatus 100 moves into a shadow area, the broadcast data reproduction apparatus attempts to connect to the wireless network at block 205. The shadow area may be, for example, an area underneath a bridge, in a valley or forested area, or any location where wireless signals are unavailable due to a blockage or lack of coverage. The connection state may be determined by the controller 120 based on information on a reception ratio or sensitivity of broadcast data received by the transceiver 110.

The broadcast data reproduction apparatus 100 determines at block 210 whether the connection to the wireless network attempted at block 205 is successful. If the connection to the wireless network is successful, the process proceeds to block 250; otherwise, the process proceeds to block 215. If the connection to the wireless network is not successful, the process may proceed to block 215 after attempting to connect to the wireless network for a period of time or number of tries set by the user using the user interface unit 160 or set as default. The process may also proceed to block 215 without trying the reconnection any more. The broadcast data reproduction apparatus 100 according to another aspect of the invention may stop operating if the connection to the wireless network is not successful.

At block 215, the broadcast data reproduction apparatus 100 switches the transceiver 110 to the power saving mode. The controller 120 stores connection information (frequency, channel, URL, playlist, etc.) in an internal or external storage device when the wireless connection is disconnected and the transceiver 110 does not try to reconnect.

When the reconnection is being tried or the transceiver 110 is switched to the power saving mode, the broadcast data reproduction apparatus 100 informs the user that the reconnection is being tried by outputting the sound source or image to the reproduction unit 150 in operation 220. The sound source or image is stored in the internal or external storage device and may be set by the user in advance. For example, in order to inform the user that the reconnection is being attempted, the broadcast data reproduction apparatus 100 may output a call connection sound or a connection image to the reproduction unit 150. The sound source or image output to the reproduction unit 150 can be output by referring to a file location or medium defined by default, a file location or medium that stores an output sound source or image, or a stored playlist. The sound source or image output to the reproduction unit 150 may be selected or set by the user using the user interface unit 160, and in the case of the sound source, "random", "repeat 1", or "repeat all" can be set.

At block 225, the broadcast data reproduction apparatus 100 determines, based on a value set by the user or by default, whether a wireless communication reconnection time has elapsed. If the wireless communication reconnection time has not elapsed, the process proceeds to block 220. If the wireless communication reconnection time has elapsed, the process proceeds to block 230. The wireless communication reconnection time may correspond to the time for one or more sound sources or images stored in the internal or external storage device to be completely reproduced.

The broadcast data reproduction apparatus 100 attempts to connect to the wireless network again at block 230. The power saving mode of the transceiver 110 may be released before trying to connect to the wireless network. The attempt to connect to the wireless network may be performed for a pre-set time or by a pre-set number of attempts. The attempt to connect to the wireless network can be performed using the connection information stored at block 215.

The controller 120 determines at block 235 whether the attempt to connect to the wireless network is successful. If the attempt is not successful, the process proceeds to block 240. If the attempt is successful, the process proceeds to block 245. The controller 120 of the broadcast data reproduction apparatus switches the transceiver 110 to the power saving mode at block 240.

The broadcast data reproduction apparatus 100 stores reproduction information (medium type, file name, reproduced time, etc.) of a sound source or image being output to the reproduction unit 150 in the internal or external storage device, and stops reproducing the sound source or image being output to the reproduction unit 150 at block 245. The reproduction of the sound source or image may stop immediately after the attempt to connect to the wireless network is successful, or may stop after the sound source or image being currently reproduced is completely reproduced. The broadcast data reproduction apparatus 100 reproduces broadcast data received by means of wireless communication at block 250.

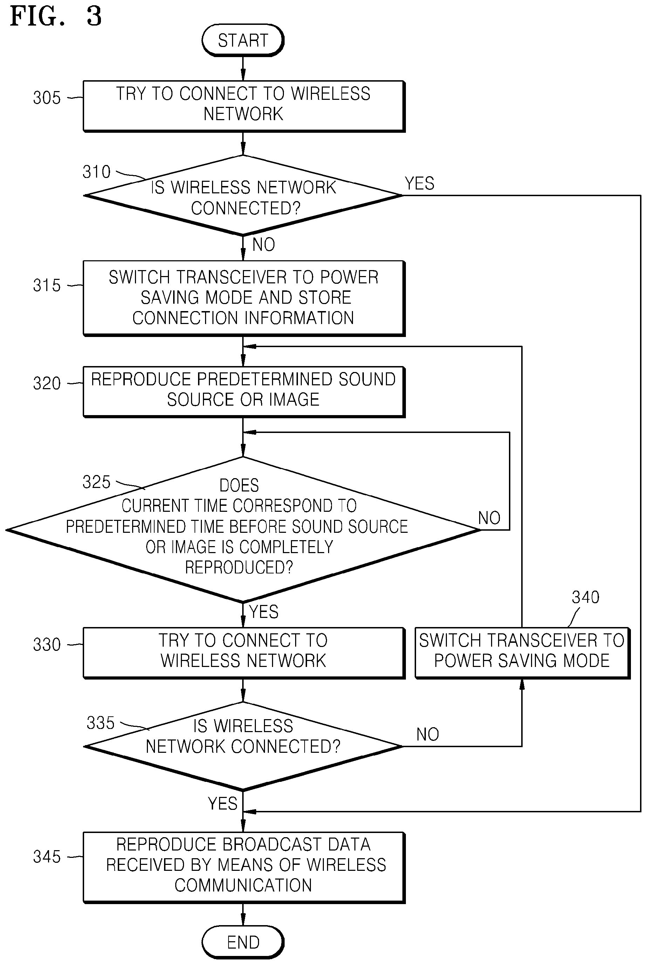

FIG. 3 is a flowchart of a process of receiving and reproducing broadcast data by means of wireless communication according to another example embodiment of the present invention. The broadcast data reproduction apparatus 100 connects to a wireless network through the transceiver 110 and outputs audio or video in real-time using the reproduction unit 150. If the connection state of the wireless network is bad or disconnected when the broadcast data reproduction apparatus 100 moves into a shadow area, the broadcast data reproduction apparatus 100 attempts to connect to the wireless network at block 305. The connection state is determined by the controller 120 based on information on a reception ratio or a sensitivity of broadcast data received by the transceiver 110.

The broadcast data reproduction apparatus 100 determines at block 310 whether the connection to the wireless network is successful. If the connection to the wireless network is successful, the process proceeds to block 345; otherwise, the process proceeds to block 315. The process may proceed to block 315 after attempting to connect to the wireless network during a time period or a number of attempts set by the user using the user interface unit 160 or set by default. Alternatively, the process may proceed directly to block 315 without attempting to reconnect any more. According to another aspect of the invention, if the attempt to connect is unsuccessful, the broadcast data reproduction apparatus may stop operating.

At block 315, the broadcast data reproduction apparatus 100 switches the transceiver 110 to the power saving mode. The controller 120 stores connection information (frequency, channel, URL, playlist, etc.) in an internal or external storage device when the wireless connection is disconnected and the transceiver 110 does not attempt to reconnect.

When the reconnection is being attempted or the transceiver 110 is switched to the power saving mode, the broadcast data reproduction apparatus 100 informs the user that the reconnection is being attempted at block 320. The broadcast data reproduction apparatus 100 informs the user by outputting the sound source or image stored in the internal or external storage device and set by the user in advance to the reproduction unit 150. For example, in order to inform the user that the reconnection is being attempted, the broadcast data reproduction apparatus 100 may output a call connection sound or a connection image to the reproduction unit 150. The sound source or image output to the reproduction unit 150 can be output by referring to a file location or medium defined as a default, a file location or medium in which an output sound source or image exists, or a stored playlist. The sound source or image output to the reproduction unit 150 may be selected or set by the user via the user interface unit 160, and in the case of the sound source, 'random', 'repeat 1', or 'repeat all' can be set.

The broadcast data reproduction apparatus 100 determines at block 325 whether the current time corresponds to a predetermined time before the sound source or image is completely reproduced, based on time information of the sound source or image. If the current time is prior to the predetermined time, the process repeats block 325. If the current time corresponds to the predetermined time, the process proceeds to block 330.

At block 330, the broadcast data reproduction apparatus 100 attempts to connect to the wireless network. The broadcast data reproduction apparatus 100 determines at block 335 whether the attempt to connect to the wireless network is successful. If the attempt is successful, the process proceeds to block 345. If the attempt is not successful, the process proceeds to block 340. The broadcast data reproduction apparatus switches the transceiver 110 to the power saving mode at block 340.

At block 345, the broadcast data reproduction apparatus 100 outputs the broadcast data after the sound source or image reproduced in operation 320 is completely reproduced using the reproduction unit 150. The broadcast data may be received by wireless communication using the connection information (frequency, channel, URL, playlist, etc.) stored in the internal or external storage device immediately after the broadcast data reproduction apparatus moves into the shadow area.

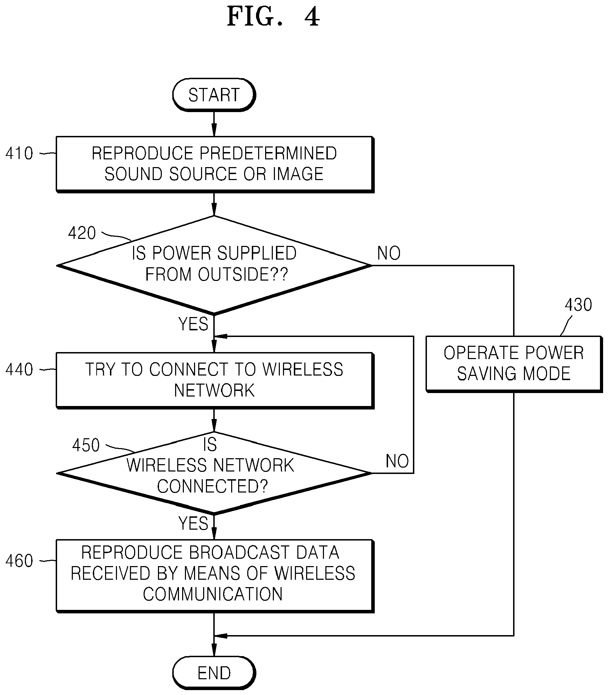

FIG. 4 is a flowchart of a process of receiving and reproducing broadcast data by means of wireless communication according to another example embodiment of the present invention. The broadcast data reproduction apparatus connects to a wireless network through the transceiver 110 and outputs audio or video in real-time using the reproduction unit 150. If the connection state of the wireless network is bad or disconnected when the broadcast data reproduction apparatus moves into a shadow area, the broadcast data reproduction apparatus informs the user that a reconnection is being attempted at block 410. The user may be informed by outputting a sound source or image stored in an internal or external storage device and set by the user in advance. The connection state is determined by the controller 120 based on information on a reception ratio or sensitivity of broadcast data received by the transceiver 110.

The controller 120 of the broadcast data reproduction apparatus 100 determines at block 420 whether power supplied to the broadcast data reproduction apparatus is external power or internal power (e.g. battery power). If the power is supplied from the outside, the process proceeds to block 440. If the power is supplied from the inside, the process proceeds to block 430.

At block 430, the broadcast data reproduction apparatus 100 operates in the power saving mode as illustrated in FIG. 2 or FIG. 3. The broadcast data reproduction apparatus 100 attempts to connect to the wireless network at block 440.

The broadcast data reproduction apparatus 100 determines at block 450 whether the attempt to connect to the wireless network is successful. If the attempt is successful, the process proceeds to block 460. If the attempt is not successful, the process proceeds to block 440.

At block 460, the broadcast data reproduction apparatus 100 reproduces the broadcast data using the reproduction unit 150 after the sound source or image reproduced in operation 410 is completely reproduced or immediately after the reconnection is successful. The broadcast data may be received using the connection information (frequency, channel, URL, playlist, etc.) stored in the internal or external storage device immediately after the broadcast data reproduction apparatus moves into the shadow area.

The present invention can also be embodied as computer readable codes on a computer readable recording medium. The computer readable recording medium is any data storage device that can store data which can be thereafter read by a computer system. Examples of the computer readable recording medium also include read-only memory (ROM), random-access memory (RAM), CD-ROMs, DVDs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

As described above, according to embodiments of the present invention, when broadcast data is received and reproduced by means of wireless communication, if it is difficult to receive the broadcast data while operating in a shadow area, a transceiver for the wireless communication is switched to a power saving mode and a predetermined sound source or image is reproduced until the wireless communication is reconnected, so that a sound source or image can be continuously provided to a user, and power can be saved.

While there have been illustrated and described what are considered to be example embodiments of the present invention, it will be understood by those skilled in the art and as technology develops that various changes and modifications, may be made, and equivalents may be substituted for elements thereof without departing from the true scope of the present invention. Many modifications, permutations, additions and sub-combinations may be made to adapt the teachings of the present invention to a particular situation without departing from the scope thereof. For example, external power, such as power supplied from an electric power grid, external generator, or the like, is an example of a power supply having a substantially unlimited capacity. Similarly, a battery (internal or external) is an example of a power supply having a limited capacity. The power supply unit 140 may also receive power supplied from an external source. Accordingly, it is intended, therefore, that the present invention not be limited to the various example embodiments disclosed, but that the present invention includes all embodiments falling within the scope of the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of receiving and reproducing broadcast data by wireless communication, the method comprising:
switching to a power saving mode which uses less electrical power than a mode employed while performing wireless communication, if a wireless network providing the wireless communication is disconnected; and
reproducing a predetermined sound source or image to a user in the power saving mode, **characterised in that**
the switching to the power saving mode comprises, storing connection information required to re-receive the broadcast data being received if the wireless network is disconnected; and
an attempt to reconnect to the wireless network comprises reconnecting the disconnected wireless communication using the stored connection information.

2. The method of claim 1, further comprising:
exiting the power saving mode after a predetermined time elapses;
attempting to reconnect to the wireless network; and
reproducing the broadcast data received by means of wireless communication if the wireless network is reconnected.

3. The method of claim 2, wherein the attempting to reconnect comprises trying to reconnect to the wireless network for a pre-set time period.

4. The method of claim 2, wherein the attempting to reconnect comprises attempting to reconnect to the wireless network a pre-set number of times.

5. The method of claim 2, wherein attempting to reconnect comprises attempting to reconnect to the wireless network at a predetermined time before the sound source or the image provided to the user is completely reproduced.

6. The method of claim 1, wherein the switching to the power saving mode comprises:
determining whether power supplied to an apparatus executing the method is supplied from a power supply unit having a limited capacity if the wireless network is disconnected; and
attempting to reconnect to the wireless network if the power is supplied from a power supply unit having a substantially unlimited capacity; and
switching to the power saving mode if the power is supplied from a power supply unit having a limited capacity.

7. The method of claim 1, further comprising
storing reproduction information required when the sound source or image provided to the user is reproduced again if the wireless network is reconnected.

8. The method of claim 1, wherein the connection information comprises a frequency, a channel a Uniform Resource Locator (URL), and a playlist.

9. The method of claim 7, wherein the reproduction information comprises a medium type, a file name, and a reproduced time.

10. An apparatus to receive and reproduce broadcast data by wireless communication, the apparatus comprising:
a controller to switch to a power saving mode that uses less electrical power than a mode employed while performing wireless communication, when a wireless network providing the wireless communication is disconnected;
a reproduction unit to reproduce a predetermined sound source or image to a user while the apparatus is operating in the power saving mode; **characterised in that**
a storage unit to store connection information required to re-receive the broadcast data being received if the wireless network is disconnected,
wherein, if the controller attempts to reconnect to the wireless network, the controller reconnects to the wireless network using the stored connection information.

11. The apparatus of claim 10, wherein, after a predetermined time elapses, if the power saving mode is exited and the wireless network is reconnected, the reproduction unit reproduces the broadcast data received by the wireless communication.

12. The apparatus of claim 10, wherein the controller attempts to reconnect to the wireless network for a pre-set time period.

13. The apparatus of claim 10, wherein the controller attempts to reconnect to the wireless network a pre-set number of times.

14. The apparatus of claim 10, wherein the controller attempts to reconnect to the wireless network at a predetermined time before the sound source or image provided to the user is completely reproduced.

15. The apparatus of claim 10, wherein:
the controller determines whether power supplied to the apparatus is supplied from a power supply unit having a limited capacity if the wireless network is disconnected; and
if the power is supplied from a power supply unit having a substantially unlimited capacity, the controller attempts to reconnect to the wireless network, and if the power is supplied from a power supply unit having a limited capacity, the controller switches to the power saving mode.

16. The apparatus of claim 10, further comprising:
a storage unit to store reproduction information required when the sound source or image provided to the user is reproduced again if the wireless network is reconnected.

17. The apparatus of claim 10, wherein the connection information comprises a frequency, a channel, a Uniform Resource Locator (URL), and a playlist.

18. The apparatus of claim 16, wherein the reproduction information comprises a medium type, a file name, and a reproduced time.

19. A computer readable recording medium storing a computer readable program for executing the method of claim 1.

## Patentansprüche

1. Verfahren zum Empfangen und Wiedergeben von Rundfunkdaten mittels drahtloser Kommunikation, wobei das Verfahren Folgendes umfasst:
Umschalten in einen Energiesparmodus, der weniger elektrische Leistung als ein Modus verwendet, der während des Ausführens der drahtlosen Kommunikation eingesetzt wird, wenn ein drahtloses Netzwerk, das die drahtlose Kommunikation bereitstellt, getrennt wird; und
Wiedergeben einer vorgegebenen Schallquelle oder eines Bilds für einen Benutzer während des Energiesparmodus,
**dadurch gekennzeichnet, dass**
das Umschalten in den Energiesparmodus das Speichern von Verbindungsinformationen umfasst, die erforderlich sind, um die empfangenen Rundfunkdaten erneut zu empfangen, wenn das drahtlose Netzwerk getrennt wird; und
ein Versuch, das drahtlose Netzwerk erneut zu verbinden, das Wiederverbinden der getrennten drahtlosen Kommunikation unter Verwendung der gespeicherten Verbindungsinformationen umfasst.

2. Verfahren nach Anspruch 1, ferner umfassend:
Beenden des Energiesparmodus, nachdem eine vorbestimmte Zeit verstrichen ist;
Versuch einer erneuten Verbindung mit dem drahtlosen Netzwerk; und
Wiedergeben der durch die drahtlose Kommunikation empfangenen Rundfunkdaten, wenn das drahtlose Netzwerk erneut verbunden ist.

3. Verfahren nach Anspruch 2, wobei der Versuch der erneuten Verbindung das Versuchen umfasst, sich für eine vorgegebene Zeitdauer mit dem drahtlosen Netzwerk erneut zu verbinden.

4. Verfahren nach Anspruch 2, wobei der Versuch der erneuten Verbindung das Versuchen umfasst, sich eine vorgegebene Anzahl von Malen mit dem drahtlosen Netzwerk erneut zu verbinden.

5. Verfahren nach Anspruch 2, wobei der Versuch der erneuten Verbindung das Versuchen umfasst, sich zu einer vorbestimmten Zeit mit dem drahtlosen Netzwerk erneut zu verbinden, bevor die für den Benutzer bereitgestellte Schallquelle oder das Bild vollständig wiedergegeben ist.

6. Verfahren nach Anspruch 1, wobei das Umschalten in den Energiesparmodus Folgendes umfasst:
Bestimmen, ob die Leistung, die einer Vorrichtung zugeführt wird, welche das Verfahren ausführt, von einer Stromversorgungseinheit zugeführt wird, die eine begrenzte Kapazität aufweist, wenn das drahtlose Netzwerk getrennt wird; und
Versuch einer erneuten Verbindung mit dem drahtlosen Netzwerk, wenn die Leistung von einer Stromversorgungseinheit zugeführt wird, die eine im Wesentlichen unbeschränkte Kapazität aufweist; und
Umschalten in den Energiesparmodus, wenn die Leistung von einer Stromversorgungseinheit zugeführt wird, die eine beschränkte Kapazität aufweist.

7. Verfahren nach Anspruch 1, ferner umfassend
Speichern von Wiedergabeinformationen, die erforderlich sind, wenn die dem Benutzer bereitgestellte Schallquelle oder das Bild erneut wiedergegeben wird, wenn das drahtlose Netzwerk erneut verbunden wird.

8. Verfahren nach Anspruch 1, wobei die Verbindungsinformationen eine Frequenz, einen Kanal, einen einheitlichen Ressourcenortsbezeichner (Uniform Resource Locator, URL) und eine Wiedergabeliste umfassen.

9. Verfahren nach Anspruch 7, wobei die Wiedergabeinformationen einen Medientyp, einen Dateinamen und eine wiedergegebene Zeit umfassen.

10. Vorrichtung zum Empfangen und Wiedergeben von Rundfunkdaten durch drahtlose Kommunikation, wobei die Vorrichtung Folgendes umfasst:
ein Steuergerät zum Umschalten in einen Energiesparmodus, der weniger elektrische Leistung als ein Modus verwendet, der während des Ausführens der drahtlosen Kommunikation eingesetzt wird, wenn ein drahtloses Netzwerk, das die drahtlose Kommunikation bereitstellt, getrennt wird;
eine Wiedergabeeinheit zur Wiedergabe einer vorbestimmten Schallquelle oder eines Bilds für einen Benutzer, während die Vorrichtung im Energiesparmodus betrieben wird;
**dadurch gekennzeichnet, dass**
eine Speichereinheit zum Speichern von Verbindungsinformationen, die erforderlich sind, um die empfangenen Rundfunkdaten erneut zu empfangen, wenn das drahtlose Netzwerk getrennt wird,
wobei, falls das Steuergerät versucht, sich erneut mit dem drahtlosen Netzwerk zu verbinden, das Steuergerät sich unter Verwendung der gespeicherten Verbindungsinformationen mit dem drahtlosen Netzwerk erneut verbindet.

11. Vorrichtung nach Anspruch 10, wobei, nachdem eine vorbestimmte Zeit verstrichen ist, wenn der Energiesparmodus verlassen wird und das drahtlose Netzwerk erneut verbunden wird, die Wiedergabeeinheit die von der drahtlosen Kommunikation empfangenen Rundfunkdaten wiedergibt.

12. Vorrichtung nach Anspruch 10, wobei das Steuergerät versucht, sich für eine vorgegebene Zeitdauer mit dem drahtlosen Netzwerk erneut zu verbinden.

13. Vorrichtung nach Anspruch 10, wobei das Steuergerät versucht, sich eine vorgegebene Anzahl von Malen mit dem drahtlosen Netzwerk erneut zu verbinden.

14. Vorrichtung nach Anspruch 10, wobei das Steuergerät versucht, sich zu einer vorbestimmten Zeit mit dem drahtlosen Netzwerk erneut zu verbinden, bevor die für den Benutzer bereitgestellte Schallquelle oder das Bild vollständig wiedergegeben ist.

15. Vorrichtung nach Anspruch 10, wobei:
das Steuergerät bestimmt, ob die der Vorrichtung zugeführte Leistung von einer Stromversorgungseinheit zugeführt wird, die eine beschränkte Kapazität aufweist, wenn das drahtlose Netzwerk getrennt wird; und
wenn die Leistung von einer Stromversorgungseinheit zugeführt wird, die eine im Wesentlichen unbeschränkte Kapazität aufweist, das Steuergerät versucht, sich mit dem drahtlosen Netzwerk erneut zu verbinden, und wenn die Leistung von einer Stromversorgungseinheit zugeführt wird, die eine beschränkte Kapazität aufweist, das Steuergerät in den Energiesparmodus umschaltet.

16. Vorrichtung nach Anspruch 10, ferner umfassend:
eine Speichereinheit zum Speichern von Wiedergabeinformationen, die erforderlich sind, wenn die dem Benutzer bereitgestellte Schallquelle oder das Bild erneut wiedergegeben wird, wenn das drahtlose Netzwerk erneut verbunden wird.

17. Vorrichtung nach Anspruch 10, wobei die Verbindungsinformationen eine Frequenz, einen Kanal, einen einheitlichen Ressourcenortsbezeichner (Uniform Resource Locator, URL) und eine Wiedergabeliste umfassen.

18. Vorrichtung nach Anspruch 16, wobei die Wiedergabeinformationen einen Medientyp, einen Dateinamen und eine wiedergegebene Zeit umfassen.

19. Computerlesbares Aufzeichnungsmedium, das ein computerlesbares Programm zum Ausführen des Verfahrens nach Anspruch 1 speichert.

## Revendications

1. Procédé de réception et de reproduction de données de diffusion au moyen d'une communication sans fil, le procédé consistant à :
commuter en mode d'économie d'énergie qui utilise moins d'énergie électrique qu'un mode utilisé lors de l'établissement d'une communication sans fil, si un réseau sans fil fournissant la communication sans fil est déconnecté ; et
reproduire une source sonore, ou une image, prédéterminée à un utilisateur dans le mode d'économie d'énergie,
**caractérisé en ce que**
la commutation en mode d'économie d'énergie consiste à stocker des informations de connexion nécessaires pour recevoir à nouveau les données de diffusion qui sont reçues si le réseau sans fil est déconnecté ; et
une tentative de reconnexion au réseau sans fil consiste à rétablir la communication sans fil déconnectée à l'aide des informations de connexion stockées.

2. Procédé selon la revendication 1, consistant en outre à :
quitter le mode d'économie d'énergie après qu'un temps prédéterminé s'est écoulé ;
tenter de se reconnecter au réseau sans fil ; et
reproduire les données de diffusion reçues au moyen d'une communication sans fil si le réseau sans fil est reconnecté.

3. Procédé selon la revendication 2, dans lequel la tentative de se reconnecter consiste à essayer de se reconnecter au réseau sans fil pendant une période de temps prédéterminée.

4. Procédé selon la revendication 2, dans lequel la tentative de se reconnecter consiste à tenter de se reconnecter au réseau sans fil un nombre de fois prédéterminé.

5. Procédé selon la revendication 2, dans lequel la tentative de se reconnecter consiste à tenter de se reconnecter au réseau sans fil à un moment prédéterminé avant que la source sonore, ou l'image, fournie à l'utilisateur ne soit complètement reproduite.

6. Procédé selon la revendication 1, dans lequel la commutation en mode d'économie d'énergie consiste à :
déterminer si l'alimentation fournie à un appareil exécutant le procédé est fournie depuis une unité d'alimentation électrique ayant une capacité limitée si le réseau sans fil est déconnecté ; et
tenter de se reconnecter au réseau sans fil si l'alimentation est fournie depuis une unité d'alimentation électrique ayant une capacité sensiblement illimitée ; et
commuter en mode d'économie d'énergie si l'alimentation est fournie depuis une unité d'alimentation électrique ayant une capacité limitée.

7. Procédé selon la revendication 1, consistant en outre à
stocker des informations de reproduction nécessaires lorsque la source sonore ou l'image fournie à l'utilisateur est reproduite à nouveau si le réseau sans fil est reconnecté.

8. Procédé selon la revendication 1, dans lequel les informations de connexion comprennent une fréquence, un canal, un localisateur de ressources uniforme (URL) et une liste de lecture.

9. Procédé selon la revendication 7, dans lequel les informations de reproduction comprennent un type de support, un nom de fichier et un temps reproduit.

10. Appareil pour recevoir et reproduire des données de diffusion au moyen d'une communication sans fil, l'appareil comprenant :
un dispositif de commande pour commuter en mode d'économie d'énergie qui utilise moins d'énergie électrique qu'un mode utilisé lors de l'établissement d'une communication sans fil, lorsqu'un réseau sans fil fournissant la communication sans fil est déconnecté ;
une unité de reproduction pour reproduire une source sonore, ou une image, prédéterminée à un utilisateur pendant que l'appareil fonctionne en mode d'économie d'énergie ; **caractérisé en ce que**
une unité de stockage pour stocker des informations de connexion nécessaires pour recevoir à nouveau les données de diffusion qui sont reçues si le réseau sans fil est déconnecté,
dans lequel, si le dispositif de commande tente de se reconnecter au réseau sans fil, le dispositif de commande se reconnecte au réseau sans fil à l'aide des informations de connexion stockées.

11. Appareil selon la revendication 10, dans lequel, après qu'un temps prédéterminé s'est écoulé, si le mode d'économie d'énergie est quitté et si le réseau sans fil est reconnecté, l'unité de reproduction reproduit les données de diffusion reçues au moyen de la communication sans fil.

12. Appareil selon la revendication 10, dans lequel le dispositif de commande tente de se reconnecter au réseau sans fil pendant une période de temps prédéterminée.

13. Appareil selon la revendication 10, dans lequel le dispositif de commande tente de se reconnecter au réseau sans fil un nombre de fois prédéterminé.

14. Appareil selon la revendication 10, dans lequel le dispositif de commande tente de se reconnecter au réseau sans fil à un moment prédéterminé avant que la source sonore, ou l'image, fournie à l'utilisateur ne soit complètement reproduite.

15. Appareil selon la revendication 10, dans lequel :
le dispositif de commande détermine si l'alimentation fournie à l'appareil est fournie depuis une unité d'alimentation électrique ayant une capacité limitée si le réseau sans fil est déconnecté ; et
si l'alimentation est fournie depuis une unité d'alimentation électrique ayant une capacité sensiblement illimitée, le dispositif de commande tente de se reconnecter au réseau sans fil et si l'alimentation est fournie depuis une unité d'alimentation électrique ayant une capacité limitée, le dispositif de commande commute en mode d'économie d'énergie.

16. Appareil selon la revendication 10, comprenant en outre :
une unité de stockage pour stocker des informations de reproduction nécessaires lorsque la source sonore ou l'image fournie à l'utilisateur est reproduite à nouveau si le réseau sans fil est reconnecté.

17. Appareil selon la revendication 10, dans lequel les informations de connexion comprennent une fréquence, un canal, un localisateur de ressources uniforme (URL) et une liste de lecture.

18. Appareil selon la revendication 16, dans lequel les informations de reproduction comprennent un type de support, un nom de fichier et un temps reproduit.

19. Support d'enregistrement lisible par ordinateur stockant un programme lisible par ordinateur pour exécuter le procédé selon la revendication 1.
